# EUROPEAN PATENT SPECIFICATION

(11) **EP 0 269 154 B1**
(45) Date of publication and mention of the grant of the patent: **26.01.1994**
(21) Application number: 87202086.2
(22) Date of filing: 29.10.1987
(51) Int. Cl.: C08G 67/02

(54) **Novel olefin/CO copolymers**
Olefin/CO-Copolymere
Copolymères d'oléfines et de CO

(30) Priority: 30.10.1986 NL 8602733
(43) Date of publication of application: 01.06.1988
(60) Divisional application: 93201373.3
(73) Proprietor: SHELL INTERNATIONALE RESEARCH MAATSCHAPPIJ B.V., 2596 HR Den Haag (NL)
(72) Inventor: Drent, Eit, NL-1031 CM Amsterdam (NL)

(56) References cited:
- EP-A- 0 121 965
- EP-A- 0 263 564
- FR-A- 2 213 947
- US-A- 2 495 286
- US-A- 2 599 501
- US-A- 4 137 382

## Description

The invention relates to novel copolymers of carbon monoxide with at least two α-olefinically unsaturated compounds.

Copolymers of carbon monoxide with one or more compounds of the general formula (CH₂=CR₁)-R₂, wherein R₁, and R₂ represent hydrogen atoms and/or hydrocarbyl groups, comprise carbonyl groups as functional groups. Therefore they are referred to as polyketones. These carbonyl groups can be converted at least partly into a variety of other functional groups by means of chemical reaction. This chemical modification leads to changes in the properties of the polymers and renders the latter eligible for uses for which the original polymers were not very or not at all suitable. As examples of chemical reactions to which the polymers can be subjected may be mentioned the conversion into polyamines by way of catalytic hydrogenation in the presence of ammonia, the conversion into polyalcohols by way of catalytic hydrogenation, the conversion into polyphenols by way of condensation with phenols and the conversion into polythiols by way of catalytic hydrogenation in the presence of hydrogen sulphide.

Among the copolymers of carbon monoxide with compounds of the general formula (CH₂=CR₁)-R₂ (for the sake of brevity referred to as A), high molecular weight linear alternating polymers composed of units of the general formula -CO-(A')-, wherein A' represents a monomer unit originating in a monomer A used, form a special class. Such copolymers can be prepared, inter alia, by using catalyst compositions based upon
a) a palladium compound,
b) an anion of an acid with a pKa of less than 4, and
c) either a phosphorus bidentate ligand, or a nitrogen bidentate ligand, which bidentate ligands meet certain structural requirements.

An investigation carried out by the Applicant into these copolymers has shown that they can be chemically modified by introducing into the monomer mixture from which they are prepared, in addition to carbon monoxide and one or more monomers A, a relatively small quantity of one or more monomers B, chosen from the group composed of the general formula

(CH₂=CR₁)OR₃,

wherein R₁, and R₂ have the meanings mentioned hereinbefore and R₃ is a hydrocarbyl group.

The use of the above-mentioned catalyst compositions with such a monomer mixture affords copolymers made up of units of the general formula -CO-(A')- and units of the general formula -CO-(B')-, wherein B' represents a monomer unit originating in a monomer B used. It follows from this structure that the present copolymers are alternating copolymers, i.e. in the polymer chains every unit CO is positioned in between a unit originating from an olefinically unsaturated monomer irrespective of whether this unit is A' or B'.

Depending on the nature of the monomers B used, the polymers obtained which, in addition to the carbonyl groups originally present in the polymers, comprise ether groups as functional groups. As distinct from the chemical modification described hereinbefore, in which at least part of the carbonyl groups present in the polymers are converted into other functional groups, i.e. a chemical modification after the polymerization, the use of monomers of type B as co-monomers can be regarded as a chemical modification in situ, i.e. during the polymerization. Just like the carbonyl groups, the ether groups can be converted at least partly into a variety of other functional groups by chemical reaction after the polymerization.

Briefly stated, the copolymers to which the invention relates can be defined as follows
a) they have been prepared by polymerization of carbon monoxide with one or more compounds A and with one or more compounds B,
b) they have a linear structure, and
c) they are made up of units of the general formula -CO-(A')- and units of the general formula -CO-(B')-. Copolymers that meet the criteria a)-c) are novel.

The present patent application therefore relates to novel copolymers of carbon monoxide with at least two α-olefinically unsaturated compounds, which polymers meet the criteria mentioned hereinbefore under a)-c), The patent application further relates to the preparation of the polymer.

Per unit -CO-(B')- the polymers of the invention preferably comprise, on an average, fever than 2000 and in particular fewer than 1500 units -CO-(A')-. The monomers A and B that are used in the preparation according to the invention preferably contain fewer than 20, and in particular fewer than 10, carbon atoms. In the preparation of the polymers the starting mixture is preferably a polymer mixture which, in addition to carbon monoxide, comprises only a single monomer A and a single monomer B.

As examples of olefinically unsaturated hydrocarbons of the general formula (CH₂=CR₁)-R₂ which in the preparation of the polymers are eligible for use as the monomers A, may be mentioned, inter alia, ethene, propene, butene-1, pentene-1, hexene-1, octene-1, styrene, p-methyl styrene and p-ethyl styrene. Preference is given to the use of ethene as the monomer A.

As examples of ethers of the general formula (CH₂=CR₁)OR₃ suitable for use as the monomer B, may be mentioned, inter alia, vinyl methyl ether, vinyl ethyl ether, vinyl propyl ether and vinyl phenyl ether. Good results have been obtained using vinyl ethyl ether as the monomer B.

As stated hereinbefore, in accordance with the nature of the monomers B used, the polymers of the invention comprise functional groups which can be at least partly converted into other functional groups by means of chemical modification.

Since in the preparation of the polymers an ether is used as monomer B, the polymers obtained will have ether groups as functional groups. By heating the polymers, alcohol can be separated therefrom to form 〉C=C〈 groups in the carbon-carbon chain of the polymer.

For the preparation of polymers according to the invention it is preferred to use the afore-mentioned catalyst compositions comprising a phosphorus or nitrogen bidentate ligand. The palladium compound used in these catalyst compositions as component a) is preferably a palladium salt of a carboxylic acid and in particular palladium acetate.

As examples of acids with a pKa of less than 4 (determined in aqueous solution at 18 °C) whose anions should be present in the catalyst compositions as components b), may be mentioned, inter alia, mineral acids, such as perchloric acid, sulphuric acid, phosphonic acid and nitrous acid, sulphonic acids, such as 2-hydroxy propane-2-sulphonic acid, para-toluenesulphonic acid, methane sulphonic acid and trifluoromethane sulphonic acid, and carboxylic acids, such as trifluoro acetic acid, trichloro acetic acid, dichloro acetic acid, difluoro acetic acid, tartaric acid and 2,5-dihydroxy benzoic acid. Preferably, the catalyst composition comprises an anion of an acid with a pKa of less than 2 as the component b) and in particular an anion of a sulphonic acid, such as para-toluenesulphonic acid, or an anion of a carboxylic acid, such as trifluoro acetic acid. In the catalyst compositions component b) is preferably present in a quantity of from 0.5 to 200, and in particular of from 1.0 to 100, equivalents per gram atom of palladium. Component b) may be introduced into the catalyst compositions either in the form of an acid or in the form of a salt. Eligible salts include non-noble transition metal salts. When component b) is used as a salt of a non-noble transition metal, preference is given to a copper salt. If component b) is used in the catalyst composition in the form of an acid or of a non-noble transition metal salt, it is preferred also to take up a quinone as a component d) in order to enhance the activity of the catalyst compositions. 1,4-Benzoquinones and 1,4-naphthaquinones are very suitable for the purpose. If desired, components a) and b) can be combined in a single compound. An example of such a compound is palladium para-tosylate.

The phosphorus bidentate ligands suitable for use as components c) in the catalyst compositions have the general formula R₆R₇P-R-PR₈R₉, wherein R₆-R₉ represent similar or dissimilar hydrocarbyl groups which may or may not be substituted with polar groups and R represents a bivalent organic bridging group which contains at least two carbon atoms in the bridge. Preference is given to phosphorus bidentate ligands wherein R₆-R₉ represent similar or dissimilar aryl groups which may or may not be substituted with polar groups, and in particular to such phosphorus bidentate ligands in which at least one of the aryl groups has at least one polar substituent situated in a position ortho or para to phosphorus. Preference is further given to phosphorus bidentate ligands in which the polar substituents that may be present in the groups R₆-R₉ are alkoxy groups and in particular methoxy groups. Finally, preference is given to phosphorus bidentate ligands in which the groups R₆-R₉ are similar to one another and in which the bivalent organic bridging group contains three carbon atoms in the bridge. Examples of suitable phosphorus bidentate ligands are
1,3-bis(diphenyl-phosphino)propane,
1,3-bis[di(4-methyl-phenyl)phosphino]propane,
1,3-bis[di(4-methoxy-phenyl)phosphino]propane,
1,3-bis[di(2-methoxy-phenyl)phosphino]propane,
1,3-bis[di(2,4-dimethoxy-phenyl)phosphino]propane,
1,3-bis[di(2,6-dimethoxy-phenyl)phosphino]propane,
and 1,3-bis[di(2,4,6-trimethoxy-phenyl)phosphino]propane.

The use of phosphorus bidentate ligands in which at least one of the groups R₆-R₉ is an aryl group having at least one polar substituent in a position ortho to phosphorus as the component c) offers an additional advantage in that in this case in addition to anions of acids with a pKa of less than 4, also anions of acids with a pKa of at least 4 but less than 6 are eligible for use as components b). Preferably, the phosphorus bidentate ligands are used in the catalyst compositions in a quantity of 0.1-3 and in particular of 0.75-2 mol per mol of palladium compound.

Nitrogen bidentate ligands that are eligible for use in the catalyst compositions as components c) have the general formula 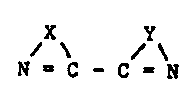
wherein X and Y represent similar or dissimilar bridging groups, each containing three or four atoms in the bridge, at least two of which are carbon atoms. In the nitrogen bidentate ligands the bridging groups X and Y are connected by the two carbon atoms shown in the general formula. In addition to this linkage, there may exist a further junction between the bridging groups X and Y, such as is the case with 1,10-phenanthroline and compounds derived therefrom. If, in addition to carbon atoms, the bridging groups X and Y contain further atoms in the bridge, these atoms are preferably nitrogen atoms. Further, preference is given to nitrogen bidentate ligands in which the bridging groups X and Y are similar. Examples of suitable nitrogen bidentate ligands are 2,2'-bipyridyl and compounds derived therefrom and 1,10-phenanthroline and compounds derived therefrom.If a catalyst composition based upon a nitrogen bidentate ligand is used to prepare the polymers of the invention, it is preferred to use 2,2'-bipyridyl or 1,10-phenanthroline. Preferably, the nitrogen bidentate ligands are used in the catalyst compositions in a quantity of 0.5-200 and in particular 1-50 mol per mol of palladium compound.

The quantity of bidentate ligand-containing catalyst composition used in the preparation of the polymers of the invention may vary within wide ranges. Per mol of olefinically unsaturated compound to be polymerized, such a quantity of catalyst is preferably used as to contain 10⁻⁷ to 10⁻³ and in particular 10⁻⁶ to 10⁻⁴ gram atom of palladium. The molar ratio of the olefinically unsaturated compounds relative to carbon monoxide is preferably 10:1-1:5 and in particular 5:1-1:2. In the monomer mixture from which the polymers are prepared, the ratio between the monomers A and B is preferably chosen such as to afford polymers comprising fewer than 2000 and in particular fewer than 1500 units -CO-(A')- per unit -CO-(B')-.

The preparation of the copolymers of the invention by using a bidentate-ligand-containing catalyst is preferably carried out at a temperature of 20-200 °C and a pressure of 1-200 bar and in particular at a temperature of 30-150 °C and a pressure of 20-100 bar. The polymerization is preferably executed in a liquid diluent. Very suitable liquid diluents are lower alcohols, such as methanol and ethanol.

The invention will now be illustrated with the aid of the following examples.

### Example

A carbon monoxide/ethene/vinyl ethyl ether terpolymer was prepared as follows. A stirred autoclave of 300 ml capacity was charged with a catalyst solution comprising
20 ml of methanol,
0.1 mmol of palladium acetate,
0.5 mmol of copper para-tosylate,
0.15 mmol of 1,3-bis(diphenyl-phosphino)propane, and
2 mmol of 1,4-benzoquinone.

After the introduction of 35 ml of vinyl ethyl ether into the autoclave, air was removed by evacuation and ethene was introduced with pressure until a pressure of 15 bar was reached, followed by carbon monoxide, until a pressure of 45 bar was reached. Then the contents of the autoclave were brought to a temperature of 90 °C. After 5 hours the polymerization was terminated by cooling down to room temperature and releasing the pressure. The polymer formed was filtered off, washed with methanol and dried in vacuo at room temperature. 6.6 g of terpolymer having a melting point of 225 °C was obtained.

With the aid of ¹³C-NMR analysis it was established that the terpolymer had a linear structure and was made up of units of the formula -CO-(C₂H₄)- and units of the formulae -CO-(C₄H₈O)- and that the said units occurred randomly distributed within the terpolymer. From the data obtained by ¹³C-NMR analysis it was further deduced that per unit of the general formula -CO-(B')- the terpolymer comprised on average 1000 units of the formula -CO-(C₂H₄)-.

## Claims (Claims for the following Contracting State(s): AT, BE, CH, DE, DK, FR, GB, GR, IT, LI, LU, NL, SE)

1. Copolymers of carbon monoxide with at least two α-olefinically unsaturated compounds, which
a) have been prepared by polymerisation of carbon monoxide with one or more monomers (A) of the general formula (CH₂=CR₁)-R₂, wherein R₁ and R₂ are hydrogen atoms and/or hydrocarbyl groups, and one or more monomers (B),
b) have a linear structure, and
c) are made up of units of the general formula -C(0)-A'- and units of the general formula -C(0)-B'-, wherein A' and B' represent monomer units originating, respectively, in the monomers A and B used, characterized in that a CO unit is positioned between each two units A' or B', and
the one or more monomers B are chosen from the group formed by compounds of the general formulae CH₂=CR₁-OR₃, wherein R₁ is a hydrogen atom or hydrocarbyl group, and R₃ is a hydrocarbyl group.

2. Copolymers as claimed in claim 1, characterized in that per unit -CO-(B')- they comprise on average fewer than 1500 units -CO-(A')-.

3. Copolymers as claimed in claim 1 or 2, characterized in that the monomers A and B used have fewer than 10 carbon atoms.

4. Copolymers as claimed in one or more of claims 1-3, characterized in that ethene is used as monomer A.

5. Copolymers as claimed in one or more of claims 1-4, characterized in that vinyl ethyl ether is used as monomer B.

6. Process for the preparation of copolymers as claimed in any one of claims 1 to 5, characterized in that a mixture of carbon monoxide with one or more monomers A and with one or more monomers B is polymerized by using a catalyst composition based upon
a) a palladium compound,
b) an anion of an acid with a pKa of less than 4, and
c) either a phosphorus bidentate ligand of the general formula R₆R₇P-R-PR₈R₉, wherein R₆-R₉ represent similar or dissimilar hydrocarbyl groups which may or may not be substituted with polar groups and R represents a bivalent organic bridging group having at least two carbon atoms in the bridge, or a nitrogen bidentate ligand of the general formula 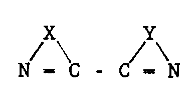 wherein X and Y represent similar or dissimilar bridging groups, each having three or four atoms in the bridge, at least two of which are carbon atoms.

7. Process as claimed in claim 6, characterized in that a catalyst composition is used which in addition comprises a quinone, such as a 1,4-benzoquinone or a 1,4-naphthaquinone, as a component d).

8. Process as claimed in claims 6 or 7, characterized in that a catalyst composition is used which comprises as component c) a phosphorus bidentate ligand in which at least one of the aryl groups holds at least one polar substituent in a position ortho or para to phosphorus.

9. Process as claimed in one or more of claims 6-8, characterized in that a catalyst composition is used which comprises as component c) a 2,2'-bipiridyl which may or may not be substituted or a 1,10-phenanthroline which may or may not be substituted.

## Claims (Claims for the following Contracting State(s): ES)

1. Process for the preparation of copolymers in which process a mixture of carbon monoxide with one or more monomers A of the general formula (CH₂=CR₁)-R₂, wherein R₁ and R₂ are hydrogen atoms and/or hydrocarbyl groups, and with one or more monomers B is polymerized by using a catalyst composition based upon
a) a palladium compound,
b) an anion of an acid with a pKa of less than 4, and
c) either a phosphorus bidentate ligand of the general formula R₆R₇P-R-PR₈R₉, wherein R₆-R₉ represent similar or dissimilar hydrocarbyl groups which may or may not be substituted with polar groups and R represents a bivalent organic bridging group having at least two carbon atoms in the bridge, or a nitrogen bidentate ligand of the general formula 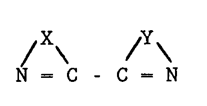 wherein X and Y represent similar or dissimilar bridging groups, each having three or four atoms in the bridge, at least two of which are carbon atoms,
and in which process copolymers are obtained which
a) have a linear structure, and
b) are made up of units of the general formula -C(0)-A'- and units of the general formula -C(0)-B'-, wherein A' and B' represent monomer units originating, respectively, in the monomers A and B used, characterized in that a CO unit is positioned between each two units A' or B', and
the one or more monomers B are chosen from the group formed by compounds of the general formulae CH₂=CR₁-OR₃, wherein R₁ is a hydrogen atom or hydrocarbyl group, and R₃ is a hydrocarbyl group.

2. Process as claimed in claim 1, characterized in that per unit -CO-(B')- the copolymers comprise on average fewer than 1500 units -CO-(A')-.

3. Process as claimed in claim 1 or 2, characterized in that the monomers A and B used have fewer than 10 carbon atoms.

4. Process as claimed in one or more of claims 1-3, characterized in that ethene is used as monomer A.

5. Process as claimed in one or more of claims 1-4, characterized in that vinyl ethyl ether is used as monomer B.

6. Process as claimed in one or more of claims 1-5, characterized in that a catalyst composition is used which in addition comprises a quinone, such as a 1,4-benzoquinone or a 1,4-naphthaquinone, as a component d).

7. Process as claimed in one or more of claims 1-6, characterized in that a catalyst composition is used which comprises as component c) a phosphorus bidentate ligand in which at least one of the aryl groups holds at least one polar substituent in a position ortho or para to phosphorus.

8. Process as claimed in one or more of claims 1-7, characterized in that a catalyst composition is used which comprises as component c) a 2,2'-bipiridyl which may or may not be substituted or a 1,10-phenanthroline which may or may not be substituted.

## Patentansprüche (Patentansprüche für folgende(n) Vertragsstaat(en): AT, BE, CH, DE, DK, FR, GB, GR, IT, LI, LU, NL, SE)

1. Copolymere aus Kohlenmonoxid mit wenigstens zwei α-olefinisch ungesättigten Verbindungen, die
a) durch Polymerisation von Kohlenmonoxid mit einem oder mit mehreren Monomeren (A) der allgemeinen Formel (CH₂=CR₁)-R₂, worin R₁ und R₂ Wasserstoffatome und/oder Hydrocarbylgruppen bedeuten, und einem oder mehreren Monomeren (B) hergestellt worden sind,
b) eine lineare Struktur aufweisen und
c) aus Einheiten der allgemeinen Formel -C(O)-A'- und Einheiten der allgemeinen Formel -C(O)-B'- bestehen, worin A' und B' Monomereinheiten bedeuten, die ihren Ursprung in den verwendeten Monomeren A bzw. B haben,
dadurch gekennzeichnet, daß zwischen jeweils zwei Einheiten A' oder B' eine CO-Einheit angeordnet ist und daß das eine oder die mehreren Monomere B aus der durch Verbindungen der allgemeinen Formel CH₂=CR₁-OR₃ gebildeten Gruppe ausgewählt sind, worin R₁ ein Wasserstoffatom oder eine Hydrocarbylgruppe bedeutet und R₃ für eine Hydrocarbylgruppe steht.

2. Copolymere nach Anspruch 1, dadurch gekennzeichnet, daß sie pro Einheit -CO-(B')- im Durchschnitt weniger als 1.500 Einheiten -CO-(A')- aufweisen.

3. Copolymere nach Anspruch 1 oder 2, dadurch gekennzeichnet, daß die eingesetzten Monomere A und B weniger als 10 Kohlenstoffatome aufweisen.

4. Copolymere nach einem oder mehreren der Ansprüche 1 bis 3, dadurch gekennzeichnet, daß als Monomer A Ethen verwendet wird.

5. Copolymere nach einem oder mehreren der Ansprüche 1 bis 4, dadurch gekennzeichnet, daß als Monomer B Vinylethylether verwendet wird.

6. Verfahren zur Herstellung von Copolymeren nach einem der Ansprüche 1 bis 5, dadurch gekennzeichnet, daß ein Gemisch aus Kohlenmonoxid mit einem oder mit mehreren Monomeren A und mit einem oder mit mehreren Monomeren B unter Verwendung einer Katalysatorzusammensetzung polymerisiert wird, die auf
a) einer Palladiumverbindung,
b) einem Anion einer Säure mit einem pKa-Wert von kleiner als 4 und
c) entweder einem Phosphorbidentatliganden der allgemeinen Formel R₆R₇P-R-PR₈R₉, worin R₆ bis R₉ gleiche oder verschiedene Hydrocarbylgruppen darstellen, die durch polare Gruppen substituiert oder unsubstiuiert sein können und R eine zweiwertige organische Brückengruppe bedeutet, die wenigstens zwei Kohlenstoffatome in der Brücke enthält, oder einem Stickstoff-Bidentatliganden der allgemeinen Formel 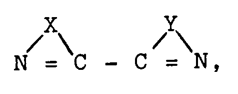 worin X und Y gleiche oder verschiedene Brückengruppen darstellen, die jeweils drei oder vier Atome in der Brücke aufweisen, von denen wenigstens zwei Kohlenstoffatome sind,
beruht.

7. Verfahren nach Anspruch 6, dadurch gekennzeichnet, daß eine Katalysatorzusammensetzung verwendet wird, die zusätzlich ein Chinon, wie ein 1,4-Benzochinon oder ein 1,4-Naphthochinon, als Komponente d) enthält.

8. Verfahren nach Anspruch 6 oder 7, dadurch gekennzeichnet, daß eine Katalysatorzusammensetzung verwendet wird, die als Komponente c) einen Phosphorbidentatliganden enthält, worin wenigstens eine der Arylgruppen wenigstens einen polaren Substituenten in einer ortho- oder para-Stellung zum Phosphor aufweist.

9. Verfahren nach einem oder mehreren der Ansprüche 6 bis 8, dadurch gekennzeichnet, daß eine Katalysatorzusammensetzung verwendet wird, die als Komponente c) ein substituiertes oder unsubstituiertes 2,2'-Bipyridyl oder ein substituiertes oder unsubstituiertes 1,10-Phenanthrolin enthält.

## Patentansprüche (Patentansprüche für folgende(n) Vertragsstaat(en): ES)

1. Verfahren zur Herstellung von Copolymeren, in welchem Verfahren ein Gemisch aus Kohlenmonoxid mit einem oder mit mehreren Monomeren A der allgemeinen Formel (CH₂=CR₁)-R₂, worin R₁ und R₂ Wasserstoffatome und/oder Hydrocarbylgruppen darstellen, und mit einem oder mit mehreren Monomeren B unter Verwendung einer Katalysatorzusammensetzung auf der Basis von
a) einer Palladiumverbindung,
b) einem Anion einer Säure mit einem pKa-Wert von kleiner als 4 und
c) entweder einem Phosphorbidentatliganden der allgemeinen Formel R₆R₇P-R-PR₈R₉, worin R₆ bis R₉ gleiche oder verschiedene Hydrocarbylgruppen bedeuten, die durch polare Gruppen substituiert oder unsubstituiert sein können und R eine zweiwertige organische Brückengruppe darstellt, die wenigstens zwei Kohlenstoffatome in der Brücke aufweist, oder einem Stickstoff-Bidentatliganden der allgemeinen Formel 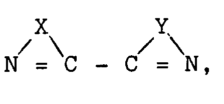 worin X und Y gleiche oder verschiedene Brückengruppen darstellen, die jeweils drei oder vier Atome in der Brücke aufweisen, von denen wenigstens zwei Kohlenstoffatome sind, polymerisiert wird,
und in welchem Verfahren Copolymere erhalten werden, die
a) eine lineare Struktur aufweisen und
b) aus Einheiten der allgemeinen Formel -C(O)-A'- und Einheiten der allgemeinen Formel -C(O)-B'- bestehen, worin A' und B' Monomereinheiten bedeuten, die ihren Ursprung in den verwendeten Monomeren A bzw. B haben, dadurch gekennzeichnet, daß zwischen jeweils zwei Einheiten A' oder B' eine CO-Einheit angeordnet ist und daß das eine oder die mehreren Monomere B aus der aus Verbindungen der allgemeinen Formel CH₂=CR₁-OR₃ gebildeten Gruppe ausgewählt ist bzw. sind, worin R₁ ein Wasserstoffatom oder eine Hydrocarbylgruppe darstellt und R₃ eine Hydrocarbylgruppe bedeutet.

2. Verfahren nach Anspruch 1, dadurch gekennzeichnet, daß je Einheit -CO-(B')- das Copolymer im Durchschnitt weniger als 1.500 Einheiten -CO-(A')- aufweist.

3. Verfahren nach Anspruch 1 oder 2, dadurch gekennzeichnet, daß die eingesetzten Monomere A und B weniger als 10 Kohlenstoffatome aufweisen.

4. Verfahren nach einem oder mehreren der Ansprüche 1 bis 3, dadurch gekennzeichnet, daß als Monomer A Ethen verwendet wird.

5. Verfahren nach einem oder mehreren der Ansprüche 1 bis 4, dadurch gekennzeichnet, daß als Monomer B Vinylethylether verwendet wird.

6. Verfahren nach einem oder mehreren der Ansprüche 1 bis 5, dadurch gekennzeichnet, daß eine Katalysatorzusammensetzung verwendet wird, die zusätzlich ein Chinon, wie ein 1,4-Benzochinon oder ein 1,4-Naphthochinon, als eine Komponente d) enthält.

7. Verfahren nach einem oder mehreren der Ansprüche 1 bis 6, dadurch gekennzeichnet, daß eine Katalysatorzusammensetzung verwendet wird, die als Komponente c) einen Phosphorbidentatliganden enthält, worin wenigstens eine der Arylgruppen wenigstens einen polaren Substituenten in einer ortho- oder para-Stellung zum Phosphor aufweist.

8. Verfahren nach einem oder mehreren der Ansprüche 1 bis 7, dadurch gekennzeichnet, daß eine Katalysatorzusammensetzung verwendet wird, die als Komponente c) ein substituiertes oder unsubstituiertes 2,2'-Bipyridyl oder ein substituiertes oder unsubstituiertes 1,10-Phenanthrolin enthält.

## Revendications (Revendications pour l'(les) Etat(s) contractant(s) suivant(s): AT, BE, CH, DE, DK, FR, GB, GR, IT, LI, LU, NL, SE)

1. Copolymères de monoxyde de carbone avec au moins deux composés non saturés de manière oléfinique en position α, qui
a) ont été préparés par polymérisation de monoxyde de carbone avec un ou plusieurs monomères (A) de formule générale (CH₂=CR₁)-R₂, dans laquelle R₁ et R₂ sont des atomes d'hydrogène et/ou des groupes hydrocarbyles, et un ou plusieurs monomères (B),
b) ont une structure linéaire, et
c) sont constitués d'unités de formule générale -C(O)-(A')- et d'unités de formule générale -C(O)-(B')-, dans lesquelles A' et B' représentent des unités monomères se trouvant initialement, respectivement, dans les monomères A et B utilisés, caractérisés en ce qu'une unité CO est positionnée entre chaque ensemble de deux unités A' ou B' et en ce que le monomère ou les monomères B sont choisis dans le groupe formé des composés de formule générale CH₂=CR₁-OR₃, dans laquelle R₁ est un atome d'hydrogène ou un groupe hydrocarbyle et R₃ est un groupe hydrocarbyle.

2. Copolymères tels que revendiqués dans la revendication 1, caractérisés en ce que, par unité -CO-(B')-, ils comprennent en moyenne moins de 1500 unités -CO-(A')-.

3. Copolymères tels que revendiqués dans la revendication 1 ou 2, caractérisés en ce que les monomères A et B utilisés ont moins de 10 atomes de carbone.

4. Copolymères tels que revendiqués dans une ou plusieurs revendications 1 à 3, caractérisés en ce qu'on utilise l'éthène comme monomère A.

5. Copolymères tels que revendiqués dans une ou plusieurs revendications 1 à 4, caractérisés en ce qu'on utilise le vinyl éthyl éther comme monomère B.

6. Procédé pour la préparation de copolymères tels que revendiqués dans l'une quelconque des revendications 1 à 5, caractérisé en ce qu'on polymérise un mélange de monoxyde de carbone avec un ou plusieurs monomères A et avec un ou plusieurs monomères B en utilisant une composition catalytique constituée à base
a) d'un composé de palladium,
b) d'un anion d'un acide ayant un pKa de moins de 4, et
c) de soit un ligand phosphoré bidenté de formule générale R₆R₇P-R-PR₈R₉, dans laquelle R₆ à R₉ représentent des groupes hydrocarbyles semblables ou différents qui peuvent être substitués ou non avec des groupes polaires et R représente un groupe organique bivalent formant pont ayant au moins deux atomes de carbone dans le pont, soit un ligand nitré bidenté de formule générale 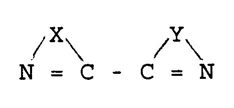 dans laquelle X et Y représentent des groupes ponts semblables ou différents, ayant chacun trois ou quatre atomes dans le pont, dont au moins deux sont des atomes de carbone.

7. Procédé tel que revendiqué dans la revendication 6, caractérisé en ce qu'on utilise une composition catalytique qui comprend de plus une quinone, telle qu'une 1,4-benzoquinone ou une 1,4-naphtaquinone, en tant que composant d).

8. Procédé tel que revendiqué dans les revendications 6 ou 7, caractérisé en ce qu'on utilise une composition catalytique qui comprend, en tant que composant c), un ligand phosphoré bidenté dans lequel au moins un des groupes aryles contient au moins un substituant polaire en position ortho ou para par rapport au phosphore.

9. Procédé tel que revendiqué dans une ou plusieurs des revendications 6 à 8, caractérisé en ce qu'on utilise une composition catalytique qui comprend, en tant que composant c), un 2,2'-bipiridyl qui peut être substitué ou non, ou une 1,10-phénanthroline qui peut être substituée ou non.

## Revendications (Revendications pour l'(les) Etat(s) contractant(s) suivant(s): ES)

1. Procédé pour la préparation de copolymères dans lequel on polymérise un mélange de monoxyde de carbone avec un ou plusieurs monomères A de formule générale (CH₂=CR₁)-R₂, dans laquelle R₁ et R₂ sont des atomes d'hydrogène et/ou des groupes hydrocarbyles, et avec un ou plusieurs monomères B, en utilisant une composition catalytique constituée à base
a) d'un composé de palladium,
b) d'un anion d'un acide ayant un pKa de moins de 4, et
c) de soit un ligand phosphoré bidenté de formule générale R₆R₇P-R-PR₈R₉, dans laquelle R₆ à R₉ représentent des groupes hydrocarbyles semblables ou différents qui peuvent être substitués ou non avec des groupes polaires et R représente un groupe organique bivalent formant pont ayant au moins deux atomes de carbone dans le pont, soit un ligand nitré bidenté de formule générale 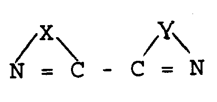 dans laquelle X et Y représentent des groupes ponts semblables ou différents, ayant chacun trois ou quatre atomes dans le pont, dont deux au moins sont des atomes de carbone,
et dans lequel procédé sont obtenus des copolymères qui
a) ont une structure linéaire, et
b) sont constitués d'unités de formule générale -C(O)-A'- et d'unités de formule générale -C(O)-B'-, dans lesquelles A' et B' représentent des unités monomériques se trouvant initialement, respectivement, dans les monomères A et B utilisés, caractérisés en ce qu'une unité CO est positionnée entre chaque ensemble de deux unités A' et B', et en ce que le monomère ou les monomères B utilisés sont choisis parmi le groupe formé par des composés de formule générale CH₂=CR₁-OR₃, dans laquelle R₁ est un atome d'hydrogène ou un groupe hydrocarbyle, et R₃ est un groupe hydrocarbyle.

2. Procédé tel que revendiqué dans la revendication 1, caractérisé en ce que, par unité -CO-(B')-, les copolymères comprennent en moyenne moins de 1500 unités -CO-(A')-.

3. Procédé tel que revendiqué dans la revendication 1 ou 2, caractérisé en ce que les monomères A et B utilisés ont moins de 10 atomes de carbone.

4. Procédé tel que revendiqué dans une ou plusieurs des revendications 1 à 3, caractérisé en ce qu'on utilise de l'éthène comme monomère A.

5. Procédé tel que revendiqué dans une ou plusieurs des revendications 1 à 4, caractérisé en ce qu'on utilise du vinyl éthyl éther comme monomère B.

6. Procédé tel que revendiqué dans une ou plusieurs des revendications 1 à 5, caractérisé en ce qu'on utilise une composition catalytique qui comprend de plus une quinone, telle qu'une 1,4-benzoquinone ou une 1,4-naphtaquinone, en tant que composant d).

7. Procédé tel que revendiqué dans une ou plusieurs des revendications 1 à 6, caractérisé en ce qu'on utilise une composition catalytique qui comprend comme composant c) un ligand phosphoré bidenté dans lequel au moins un des groupes aryles contient au moins un substituant polaire en position ortho ou para par rapport au phosphore.

8. Procédé tel que revendiqué dans une ou plusieurs des revendications 1 à 7, caractérisé en ce qu'on utilise une composition catalytique qui comprend comme composant c) un 2,2'-bipiridyle qui peut être substitué ou non, ou une 1,10-phénanthroline qui peut être substituée ou non.
